# EUROPÄISCHE PATENTSCHRIFT

(11) **EP 0 600 295 B1**
(45) Veröffentlichungstag und Bekanntmachung des Hinweises auf die Patenterteilung: **20.10.1999**
(21) Anmeldenummer: 93118479.0
(22) Anmeldetag: 16.11.1993
(51) Int. Cl.: H04L 5/06, H04B 7/005

(54) **Verfahren zur Frequenzbereichsentzerrung eines breitbandigen Übertragungssystems**
Method for frequency domain equalisation of a broadband transmission system
Procédé pour l'égalisation dans le domaine de fréquences d'un système de transmission à bande large

(30) Priorität: 03.12.1992 DE 4240609
(43) Veröffentlichungstag der Anmeldung: 08.06.1994
(73) Patentinhaber: GRUNDIG Aktiengesellschaft, 90762 Fürth (DE)
(72) Erfinder: Reis, Johannes, GRUNDIG EMV, Elektro-Mechanische, & Co KG, D-90748 Fürth (DE); Zumkeller, Markus, GRUNDIG EMV, Elektro-Mechanisch, & Co KG, D-90748 Fürth (DE)

(56) Entgegenhaltungen:
- US-A- 4 058 713
- PROCEEDINGS OF IEEE GLOBAL TELECOMMUNICATIONS CONFERENCE GLOBECOM 89 27-30 November 1989, Dallas, Texas (US) NEW YORK (US) seiten 428-432, XP 91140 J.C.RAULT ET AL.: "THE CODED ORTHOGONAL FREQUENCY DIVISION MULTIPLEXING (COFDM) TECHNIQUE, AND ITS APPLICATION TO DIGITAL RADIO BROADCASTING TOWARDS MOBILE RECEIVERS"

## Beschreibung

Der Qualitätsstandard gespeicherter Audiosignale wurde durch die Einführung digitaler Speichermedien sowie digitaler Aufnahme- und Wiedergabeverfahren immer weiter verbessert. Um auch für Hörfunkübertragungen eine annähernd gute Empfangsqualität zu erreichen, hat es sich insbesondere bei einem mobilen Empfang in Kraftfahrzeugen oder mit tragbaren Empfängern als erforderlich erwiesen, ein neues Funkübertragungsverfahren zu verwenden.

Unter der Bezeichnung Digital Audio Broadcasting, kurz DAB, ist dieses neue digitale Funkübertragungsverfahren bekannt. Um Signalverzerrungen durch Feldstärkeschwankungen und Mehrwegeempfang zu verhindern, werden beim DAB die digitalen Daten über eine Vielzahl von Trägerfrequenzen übertragen. Diese weisen einen äquidistanten Frequenzabstand auf, so daß für die Übertragung eine Bandbreite von beispielsweise 1,5 MHz genutzt wird. Jeder Träger wird dabei mit einem Teil der zu übertragenden digitalen Daten nach dem 4-PSK-Verfahren moduliert. Da das DAB-Verfahren im Gleichwellenbetrieb arbeitet, weisen sämliche Träger eines Sendegebietes identische Modulationsinhalte auf.

Aufgrund der großen zur Verfügung stehenden Bandbreite können bei DAB mehrere Programme im Zeitmultiplex übertragen werden. Ein Programmwechsel erfolgt daher nicht durch einen Wechsel der Trägerfrequenzen, sondern durch das Auswerten von in einem anderen Zeitschlitz übertragenen Daten.

Durch die beschriebenen Maßnahmen kann jedoch der Funkübertragungskanal selbst nicht verändert werden. Das bedeutet, daß es weiterhin zu Feldstärkeschwankungen und Mehrwegeempfang kommt, was unter extremen Bedingungen, wie geringe Sendeleistung und großem Abstand zwischen Sender und Empfänger, zu Empfangsproblemen führen kann. Weiterhin ist denkbar, daß durch die Verwendung kostengünstiger Bauteile die Signalqualität beeinträchtigt wird.

Aus der EP-B1-184 018 ist ein Demodulator für frequenzmodulierte Signale bekannt, bei dem eine schmalbandige Bandpaßfilterung des Nachrichtensignals durchgeführt wird. Durch diese Bandpaßfilterung sowie durch die vorgeschalteten Eingangsstufen resultieren Phasen- und Dämpfungsverzerrungen. Diese werden durch ein rekursives Filter, das als Entzerrer dient, kompensiert. Die Koeffizienten des Entzerrers sind so gewählt, daß die Impulsantwort des Bandpasses und Entzerrers ein minimales Fehlerquadrat aufweist.

Ein Nachteil dieser Schaltungsanordnung ist, daß lediglich die zeitvarianten Verzerrungen durch den schmalbandigen Bandpaß und durch vorgeschaltete Eingangsstufen minimiert werden. Zeitvariante Verzerrungen durch den Übertragungskanal oder weitere, das Empfangssignal beeinträchtigende Einflüsse werden nicht korrigiert.

Aus der WO 92/16054 ist eine Schaltungsanordnung bekannt, die Verzerrungen des Empfangssignals durch Mehrwegeempfang kompensiert. Das zunächst durch eine Maximum-Likelihood-Abschätzung entzerrte Signal wird einem adaptiven Filter zugeleitet. Dieser bildet den Übertragungskanal nach und gibt die nicht auf dem direkten Pfad empfangenen Anteile des Empfangssignals aus. Diese Anteile werden dann vom Empfangssignal subtrahiert.

Durch diese Schaltungsanordnung kann Mehrwegeempfang nur begrenzt entzerrt werden, da die Nachbildung des Übertragungskanals nicht genau genug sein kann. Dies liegt darin begründet, daß bei einer adaptiven Nachbildung die Anzahl der Übertragungswege begrenzt bleiben muß.

Außerdem werden Amplitudenverzerrungen aufgrund frequenzselektiver Dämpfung im Empfänger und im Übertragungskanal überhaupt nicht berücksichtigt.

Aus US 4,058,713 ist eine Einrichtung zur Verarbeitung eines Nachrichtensignals, welches über ein zeit- oder frequenzspreizendes Medium übertragen worden ist, bekannt. Hierbei wird das übertragenen Nachrichtensignal anhand eines mit diesem übertragenen bekannten Signals rekonstruiert. Die Einrichtung weist erste Mittel zur Transformation aller empfangener Signale in den Frequenzbereich und zweite Mittel zur Herstellung des bekannten Signals auf. Im weiteren sind Mittel vorgesehen, um das übertragenen Nachrichtensignal im Frequenzbereich wieder herzustellen und dieses Nachrichtensignal in den Zeitbereich zurückzutransformieren. Nachteilig hierbei ist, daß nur ein Nachrichtensignal verarbeitet werden kann.

Es ist daher die Aufgabe der Erfindung, ein Verfahren für eine breitbandige Übertragung anzugeben, um zeitvariante und zeitinvariante Verzerrungen im Frequenzgang des Empfangssignals zu entzerren.

Diese Aufgabe wird bei einem digitalen Empfänger durch die kennzeichnenden Merkmale des Patentanspruchs 1 gelöst.

Ein Vorteil des erfingungsgemäßen Verfahrens zur Frequenzgangkorrektur besteht darin, daß sowohl zeitinvariante Verzerrungen als auch zeitvariante Verzerrungen entzerrt werden können. Weiterhin können die Verzerrungen sowohl durch den Übertragungskanal als auch durch Baugruppen im Sender oder Empfänger verursacht werden.

Der Vorteil des erfindungsgemäßen Verfahrens nach Patentanspruch 2 liegt darin, daß aufgrund von in einem Speicher abgespeicherter Vorgaben eine weitgehend beliebige Entzerrung durchgeführt wird.

Das erfindungsgemäße Verfahren zur Frequenzgangkorrektur nach Anspruch 3 weist den Vorteil auf, daß sowohl Verzerrungen, die das Übertragungssignai auf der Übertragungsstrecke als auch im Empfänger selbst verändert haben, wieder entzerrt werden können. Weiterhin kann die Korrekturkennlinie insbesondere für zeitinvariante Verzerrungen sehr einfach durch Inversion der Übertragungsfunktion berechnet werden.

Das erfindungsgemäße Verfahren nach Anspruch 4 weist den Vorteil auf, daß lediglich eine Multiplikation von Korrekturkennlinie und dem Kurzzeitspektrum des Empfangssignals zur Entzerrung erforderlich ist. Diese Multiplikation kann von der ohnehin vorhandenen digitalen Signalverarbeitungsschaltung durchgeführt werden. Weiterhin vorteilhaft ist, daß auch erst nach der Entzerrung auf das Empfangssignal einwirkende Verzerrungen durch eine abgespeicherte Korrekturkennlinie berücksichtigt werden können.

Außerdem ist von Vorteil, daß die hohe Auflösung des Empfangssignals im Empfänger dazu benutzt wird, Signalverzerrungen zu kompensieren. Dadurch geht der Auflösungsverlust im Empfänger nicht verloren, sondern wird zur Entzerrung genutzt.

Das erfindungsgemäße Verfahren nach Anspruch 5 weist den Vorteil auf, daß besonders starke Signaleinbrüche, bei denen der Unterschied zwischen Nutzsignal und dem Quantisierungsrauschen nur noch gering ist, nicht vollständig durch die Korrekturlinie ausgeglichen werden. Dadurch können diese Signalabschnitte als weniger zuverlässig erkannt werden.

Das erfindungsgemäße Verfahren nach Anspruch 6 weist den Vorteil auf, daß die Korrekturkennlinie durch eine zeitliche Mittelung der Amplitude des Kurzzeitspektrums berechnet wird, wodurch eine dynamische Anpassung an den Übertragungskanal erreicht wird und ein sich zeitlich ändernder Übertragungskanal berücksichtigt werden kann. Weiterhin ist von Vorteil, daß die Berechnung der Korrekturkennlinie beschleunigt werden kann, indem für Frequenzbereiche mit konstanter Übertragungsfunktion die Korrekturkennlinie nur einmal berechnet wird.

Das Verfahren nach Anspruch 7 weist den Vorteil auf, daß eine neue Korrekturkennlinie nur dann berechnet wird, wenn sich das Kurzzeitspektrum des Empfangssignals geändert hat oder wenn der Benutzer dies wünscht. Dadurch kann unnötiger Rechenaufwand vermieden und immer ein optimal entzerrtes Empfangssignal bereitgestellt werden.

Das Verfahren nach Anspruch 8 weist den Vorteil auf, daß zeitinvariante Verzerrungen, beispielsweise durch Empfängerbaugruppen, bereits bei der Produktion berücksichtigt werden und eine entsprechende Korrekturkennlinie in einem Speicher abgelegt wird. Darüber hinaus steht bereits bei Beginn einer Übertragung eine Korrekturkennlinie zur Verfügung.

Das Verfahren gemäß Anspruch 9 weist den Vorteil auf, daß das benötigte Kurzzeitspektrum des Empfangssignals bereits vorliegt und nicht speziell zur Entzerrung berechnet werden muß.

Die Verwendung des erfindungsgemäßen Verfahrens beim Digital Audio Broadcasting gemäß Anspruch 10 weist den Vorteil auf, daß die Korrekturkennlinie sehr einfach berechnet werden kann, da beim Digital Audio Broadasting die Amplitude des Spektrums idealerweise immer konstant ist.

Die Erfindung wird im folgenden näher beschrieben und erläutert. Es zeigt:
- Fig. 1: ein Blockschaltbild eines Empfängers mit der erfindungsgemäßen Entzerrung,
- Fig. 2a: ein Kurzzeitspektrum des idealen Empfangssignals,
- Fig. 2b: ein Kurzzeitspektrum des tatsächlichen Empfangssignals,
- Fig. 3: eine Korrekturkennlinie und
- Fig. 4: ein Kurzzeitspektrum des entzerrten Empfangssignals aus Fig. 2

Im folgenden Ausführungsbeispiel wird von einer Anwendung beim Digital-Audio-Broadcasting ausgegangen. Die erfindungsgemäße Verfahrensweise kann auch bei anderen digitalen und breitbandigen Übertragungsverfahren eingesetzt werden.

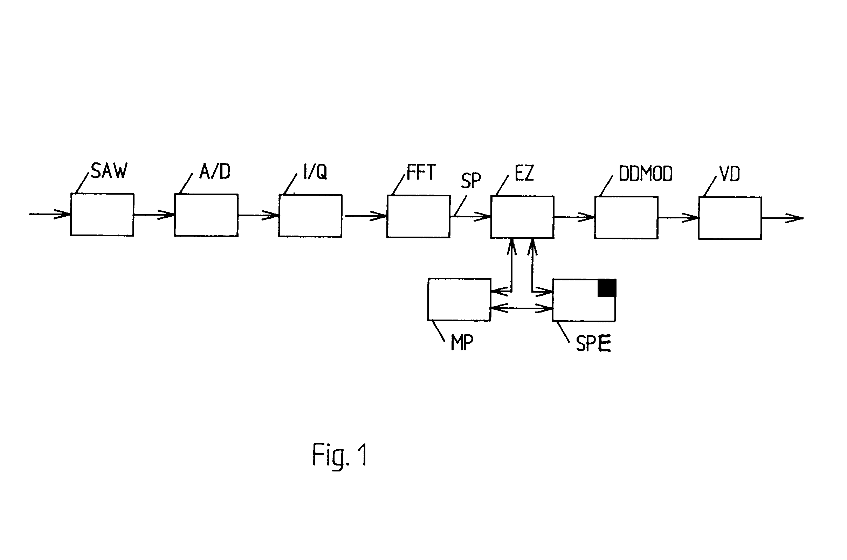

Fig. 1 zeigt eine Empfängerschaltung für ein breitbandiges digitales Signal, wie es beim Digital Audio Broadcasting übertragen wird. Dieses Signal wird über einen Übertragungskanal, der Strecke zwischen Sender und Empfänger, übertragen, wobei insbesondere frequenzselektive Dämpfungen, aber auch Mehrwegeausbreitung und Phasenverzerrungen auftreten. Im Empfänger selbst kann eine weitere Verzerrung, insbesondere durch die Verwendung kostengünstiger Baugruppen, kaum verhindert werden.

Unter anderem wird das Eingangssignal des Empfängers durch ein SAW-Filter SAW bandbegrenzt. Da aus Kostengründen dieses SAW-Filter SAW: keine ideale Filtercharakteristik aufweist, wird das Eingangssignal frequenzselektiv gedämpft. Danach wird das Ausgangssignal des SAW-Filters SAW im Analog-Digital-Wandler A/D abgetastet und quantisiert. Im folgenden wird davon ausgegangen, daß diese Quantisierung mit einer festen Wortlänge von beispielsweise 8 Bit erfolgt. Dies führt zu einem Quantisierungsrauschen mit einer Amplitude von einem halben Bit. Bei einer Wortlänge von 8 Bit und einer Dynamik der Amplitude von 6 dB pro Bit kann somit eine Dynamik von 48 dB verarbeitet werden. Die Rauschschwelle aufgrund des Quantisierungsrauschens liegt demnach 45 dB unterhalb der maximalen Signalamplitude.

Das Ausgangssignal des A/D-Wandlers A/D wird in der Baugrupe IQ in seine reelle und imaginäre Komponente aufgespaltet. Dadurch kann eine weitere unerwünschte Signalbeeinflussung entstehen. Die reelle und imaginäre Signalkomponente werden im Anschluß daran in einem Fouriertransformator FFT in den Spektralbereich überführt.

Das Ausgangssignal des Fouriertransformators FFT ist das Kurzzeitspektrum SP des Empfangssignals. Dieses wird im Entzerrer EZ mit einer komplexen Korrekturkennlinie KKL gewichtet, worauf im folgenden noch detailliert eingegangen wird. Die Korrekturkennlinie KKL wird von einem Prozessor MP durch einen Vergleich der im Kurzzeitspektrum SP auftretenden Phasen- und Amplitudenwerte mit im Speicher SPE abgespeicherten Phasen- und Amplitudenwerten, die den gewünschten Verlauf des Kurzzeitspektrums SP realisieren, bestimmt. Aus der Differenz zwischen gewünschter und tatsächlicher Amplitude und Phase von Einzelträgern oder Gruppen von Einzelträgern wird ein Wert für die Phasendrehung und die Verstärkung berechnet. Der Verstärkungswert sowie die erforderliche Phasendrehung, wird im Speicher SPE abgespeichert und stellt die komplexe Korrekturkennlinie KKL dar. Hierbei wird darauf geachtet, daß dieser Verstärkungswert einen maximalen Wert nicht übersteigt. Es besteht die Möglichkeit, vorher berechnete Korrekturkennlinien KKL durch eine Mittelwertbildung zwischen dem alten und dem neuen Phasen- und Verstärkungswert zu berücksichtigen. Außerdem kann durch eine Vorgabe, wie oft eine neue Korrekturkennlinie KKL berechnet wird, festgelegt werden, wie gut zeitvariante Veränderungen berücksichtigt werden und wie hoch der Rechenaufwand wird. Wird beispielsweise nur bei jedem Übertragungsbeginn eine neue Korrekturkennlinie KKL berechnet, können nur zeitinvariante Einflüsse und z.B. Alterungseffekte von Baugruppen berücksichtigt werden. Wird die Korrekturkennlinie KKL aber in bestimmten Zeitabständen neu berechnet, die durch die Phasen- und Amplitudenänderungen des Kurzzeitspektrums SP individuell festgelegt werden, so ist eine störungsfreie Übertragung auch bei sich schnell ändernden Einflüssen auf dem Übertragungsweg sichergestellt. Eine weitere Möglichkeit besteht darin, daß bei vermehrt auftretenden Übertragungsfehlern der Benutzer selbst eine Neuberechnung der Korrekturkennlinie initialisiert. Nach der Entzerrung erfolgt die digitale Demodulation DDMOD nach dem DQPSK-Verfahren. Das demodulierte Signal wird in einem Viterbi-Decoder VD, der eine geringere Wortlänge aufweist als der A/D-Wandler A/D, decodiert. Im Anschluß daran steht das digitale Signal zur weiteren Verarbeitung, z.B. D/A-Wandlung, zur Verfügung.

Alternativ besteht auch die Möglichkeit, den Entzerrer EZ zwischen dem digitalen Demodulator DDMOD und dem Viterbi-Decoder VD anzuordnen. Dann allerdings ist es erforderlich, die Korrekturkennlinie KKL zu quadrieren und anschließend das demodulierte Kurzzeitspektrum SP mit der quadrierten Korrekturkennlinie KKL zu multiplizieren.

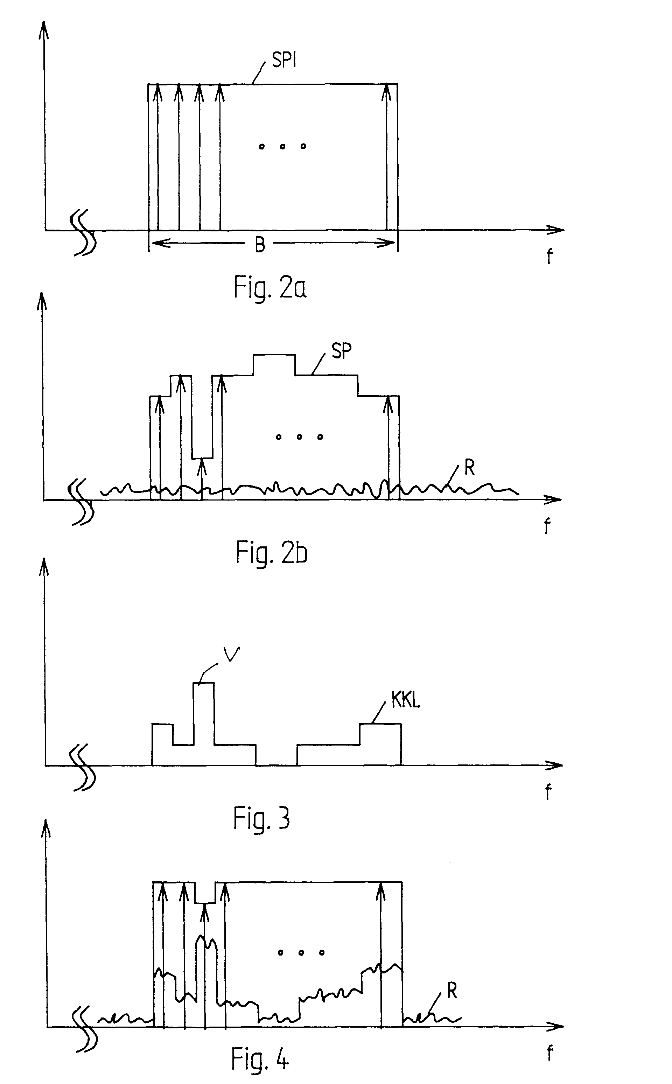

Um eine möglichst große Anschaulichkeit der Darstellungen in den Figuren 2a bis 4 zu erreichen, werden nur einige Einzelträgerfrequenzen und zusätzlich die Hüllkurven der Spektren dargestellt.

In Fig. 2a ist ein ideales Kurzzeitspektrum SPI des Eingangssignals dargestellt. Über eine Bandbreite B sind die Einzelträger mit äquidistantem Frequenzabstand verteilt. Da die Einzelträger 4-PSK moduliert sind, ändert sich durch eine Modulation lediglich ihre Phase, Frequenz und Amplitude bleiben konstant.

Das in Fig. 2b dargestellte Kurzzeitspektrum SP ist aufgrund von Beeinflussungen auf dem Übertragungsweg und durch Empfängerbaugruppen verzerrt. Exemplarisch ist eine Absenkung der Signalamplitude an der oberen und unteren Frequenzgrenze der Übertragungsbandbreite sowie ein besonders starker Einbruch der Signalamplitude in einem begrenzten Frequenzbereich ausgewählt worden. Derartige Beeinflussungen der Signalamplitude können durch den verwendeten SAW-Filter SAW zur Bandbegrenzung und durch Fadingeinbrüche verursacht werden. Weiterhin ist die Rauschschwelle R, die durch das Quantisierungsrauschen entsteht, symbolisch eingezeichnet. In Fig. 2b ist lediglich die Amplitude des Kurzzeitspektrums SP dargestellt. Da es sich hier aber um komplexe Signale handelt, existiert eine ähnliche Kurve für die Phase des Kurzzeitspektrums SP.

In Fig. 3 ist die aufgrund des tatsächlichen Kurzzeitspektrums SP berechnete komplexe Korrekturkennlinie KKL eingezeichnet. Um ein Kurzzeitspektrum mit dem gewünschten und im Speicher SPE abgespeicherten Phasen- und Amplitudenverlauf zu erzeugen, ist eine Phasendrehung und Verstärkung V der Amplituden der Einzelträger erforderlich. Diese Phasendrehung und Verstärkung V wird durch die Korrekturkennlinie KKL frequenzabhängig festgelegt. Sofern nach der Entzerrung EZ keine weiteren Amplitudenverzerrungen des Kurzzeitspektrums SP auftreten, ergibt sich die Korrekturkennlinie KKL für die Amplitude des Kurzzeitspektrums SP so wie in Fig. 3 eingezeichnet. Die Korrekturkennlinie KKL wird dann durch einen Vergleich der frequenzabhängigen Amplitude des Kurzzeitspektrums SP mit dem Maximalwert der Amplitude des Kurzzeitspektrums SP ermittelt. Falls weitere Verzerrungen des Empfangssignals auch noch nach der Entzerrung EZ erfolgen, wird das Kurzzeitspektrum SP bei der Entzerrung EZ derart verändert, daß das Ausgangssignal der gesamten Schaltung einen unverzerrten Verlauf aufweist. In Fig. 3 ist lediglich die Verstärkung V über der Frequenz aufgetragen. Da jedoch auch eine Phasenentzerrung durchgeführt werden soll, ist eine ähnliche Kurve für die Korrektur der Phase der Einzelträger im Speicher SPE abgespeichert. Hierbei ist darauf zu achten, daß durch die Phasenentzerrung nicht die Information der phasenmodulierten Einzelträger zerstört wird. Dies wird dadurch ausgeschlossen, daß die Phase nur um einen maximalen Wert verändert werden darf. Dieser ergibt sich aus dem Quotienten von 180° durch die Anzahl möglicher Phasen. Bei der verwendeten DQPSK-Modulation mit vier möglichen Phasen ergibt sich somit 45^{o} als Maximalwert für die Phasenentzerrung. Weiterhin ist zu beachten, daß durch die Phasenverschiebung bei der Entzerrung eine Phasenlage erreicht wird, die von der vorhergehenden Phase um 0^{o}, 90°, 180° oder 270° verschieden ist. Liegt also die Phase eines Empfangssignals um 280^{o} verschieden von der Phasenlage des vorhergehenden Empfangssignals, ist eine Phasendrehung um -10^{o} erforderlich, um eine Entzerrung durchzuführen.

Der sich ergebende Maximalwert der Verstärkung V ergibt sich aus der folgenden Überlegung. In einem noch folgenden Verarbeitungsschritt erfolgt eine Decodierung des verarbeiteten Eingangssignals nach einem Viterbi-Algorithmus, für den lediglich eine begrenzte Wortbreite, beispielsweise 4 Bit, erforderlich ist. Da wegen ihrer größeren Wertigkeit die höherwertigen 4 Bit durch den Viterbi-Decoder VD verarbeitet werden, ist es ein Ziel der Verstärkung V, daß diese vom Viterbi-Decoder VD benötigten Bits eine Signalinformation beinhalten. Gleichzeitig soll aber vermieden werden, daß die Rauschschwelle R so stark angehoben wird, daß auch Rauschen durch den Viterbi-Decoder VD ausgewertet wird. Daraus ergibt sich, daß die Einzelträger so verstärkt werden, daß das höchstwertige Bit des zugehörigen Abtastwertes durch Signalinformation besetzt ist. Durch die Verstärkung V darf jedoch kein Rauschen dem Viterbi-Decoder VD zugeleitet werden. Bei einer Wortlänge von 8 Bit des A/D-Wandlers A/D und einer Wortlänge von 4 Bit des Viterbi-Decoders VD, sowie bei Quantisierungsrauschen von einem halben LSB (niederwertigstes Bit) ergibt sich eine maximale Verstärkung um 4 Bit, oder 24 dB. Die Amplitudenwerte der Einzelträger werden also so lange um 1 Bit hin zu höherwertigen Binärstellen verschoben, bis das höchstwertige Bit durch Signalinformation besetzt ist, maximal aber um 4 Bit, wodurch das Quantisierungsrauschen dem Viterbi-Decoder VD nicht zugeleitet wird.

Zudem erkennt der Viterbi-Decoder VD daran, daß aufgrund der geringeren Signalamplitude das höchstwertige Bit nicht gesetzt ist, einen weniger zuverlässigen Übertragungswert. Es kann in Abhängigkeit der innerhalb der vom Viterbit-Decoder VD ausgewerteten Wortlänge gesetzten Bit eine Abschätzung der Zuverlässigkeit der empfangenen Signale durchgeführt werden.

Wie bereits beschrieben, ist auch die Berücksichtigung von Verzerrungen möglich, die erst durch nachfolgende Baugruppen erfolgt. Um derartige Einflüsse zu berücksichtigen, wird die komplexe Korrekturkennlinie KKL so gewählt, daß nach den noch zu erwartenden Verzerrungen ein annähernd ideales Kurzzeitspektrum SPI nach Fig. 2a entsteht. Im weiteren wird jedoch davon ausgegangen, daß nur vor dem Entzerrer EZ Verzerrungen auftreten. Um den Verlauf der Verstärkung V anschaulich zu machen, ist eine kontinuierliche Darstellung gewählt worden. Die erforderliche Korrektur der Phasenlage des Kurzzeitspektrums SP wird entsprechend durchgeführt. Der Entzerrer EZ verstärkt den Abtastwert entweder um 6dB, 12dB, 18dB oder 24 dB, was 1, 2, 3 oder 4 Bit entspricht.

An der unteren Frequenzgrenze weist das Kurzzeitspektrum SP eine geringe Amplitude auf, weshalb die Korrekturkennlinie KKL einen relativ großen Verstärkungswert V annimmt. Mit steigender Übertragungsfrequenz steigt auch die Amplitude des Kurzzeitspektrum SP und die Korrekturkennlinie KKL sinkt, bis zu dem Fadingeinbruch, bei dem die Amplitude des Kurzzeitspektrums SP einen starken Einbruch zeigt. Dieser Einbruch kann aufgrund der Begrenzung der Verstärkung nicht vollständig kompensiert werden. Doch auch hier gelingt es, die Ampltide des Kurzzeitspektrums SP so weit zu verstärken, daß eine Auswertung einiger der höchstwertigen Bits erfolgen kann, ohne daß Quantisierungsrauschen den Viterbi-Decoder VD beeinflußt. Dieser erhält durch die geringere Signalamplitude gleichzeitig die Information, daß dieser Übertragungswert weniger zuverlässig ist. Nach dem Fadingeinbruch steigt die Signalamplitude des Kurzzeitspektrums SP wieder an und sinkt dann bis zur oberen Frequenzgrenze ab. Dieser Verlauf spiegelt sich in der Korrekturkennlinie KKL wieder, die bei der Mittenfrequenz der Übertragungsbandbreite eine geringere, hin zur oberen Frequenzgrenze eine ansteigende Verstärkung V bewirkt.

Wird das Kurzzeitspektrum SP aus Fig. 2b entsprechend der Korrekturkennlinie KKL aus Fig. 3 verstärkt, so erhält man das Spektrum, das in Fig. 4 dargestellt ist. Eine Amplitudenabsenkung tritt lediglich bei dem Fadingeinbruch auf, aber selbst an dieser Stelle kann die Dämpfung wesentlich verringert werden. Da der Viterbi-Decoder VD lediglich die vier höchstwertigen Bit auswertet und die Rauschschwelle R über der gesamten Übertragungsbandbreite unterhalb dieses Wertes liegt, hat die mit der Verstärkung verbundene Anhebung des Rauschens keinerlei Einfluß auf die Verarbeitung im Viterbi-Decoder VD. Vergleicht man die Kurzzeitspektren der Fig. 2a, Fig. 2b und Fig. 4, wird klar, daß aufgrund dieser Verfahrensweise eine bedeutende Verbesserung der Übertragungsqualität erreicht werden kann.

Die Verstärkung V des Kurzzeitspektrums SP und die Korrektur dessen Phasenlage kann, da die Einzelträger aufgeteilt in reelle und imaginäre Signalkomponente vorliegen, als komplexe Multiplikation mit der komplexen Korrekturkennlinie KKL realisiert werden. Dabei spielt es keine Rolle, ob die komplexe Korrekturkennlinie KKL als reelle und imaginäre Komponente oder als Betrag und Phase im Speicher SPE abgelegt ist.

Dieses Verfahren zur Frequenzgangkorrektur kann in verschiedenen Varianten realisiert werden. Es ist eine Minimallösung denkbar, bei der eine geräteindividuelle Korrekturkennlinie KKL bei der Herstellung berechnet und im Speicher SPE abgelegt wird. Dies eignet sich besonders für kostengünstige stationäre Empfänger, da eine Neuberechnung der Korrekturkennlinie KKL entfallen kann und negative Einflüsse aller Baugruppen des Empfängers, die vor und nach der Entzerrung EZ angeordnet sind, einfach kompensiert werden können. In einer weiteren Variante ist die Realisierung einschließlich Berechnung der Korrekturkennlinie KKL denkbar, wobei die komplexe Korrekturkennlinie KKL unterschiedlich schnell neu berechnet wird. Besonders für mobile Empfänger ist es für die Empfangsqualität entscheidend, wie schnell sich ändernde Einflüsse des Übertragungskanals durch eine neu berechnete Korrekturkennlinie KKL wieder kompensiert werden können.

Außerdem besteht die Möglichkeit, nur die Amplitude des Kurzzeitspektrums SP bis zu einem konstanten Maximalwert zu verstärken, was einen Speicher SPE zur Speicherung der Korrekturkennlinie KKL und des gewünschten Verlaufs des Kurzzeitspektrums SP einspart.

## Patentansprüche

1. Verfahren zur Frequenzgangkorrektur für Mehrkanal-Übertragungsverfahren, bei dem eine Entzerrung (EZ) frequenzselektiver Phasen- und Dämpfungsverzerrungen des Empfangssignals erfolgt, indem aufgrund der quantisierten Phasen- und Amplitudenwerte des Empfangssignals dessen Kurzzeitspektrum (SP) gebildet wird und eine Korrekturkennlinie (KKL) durch individuelle Verstärkung der einzelnen Träger des Kurzzeitspektrums (SP) auf die Amplitude des stärksten Trägers mittels einer Steuereinheit (MP) gebildet wird und das Kurzzeitspektrum (SP) des Empfangssignals bei der Entzerrung (EZ) mit dieser Korrekturkennlinie (KKL) gewichtet wird.

2. Verfahren nach Anspruch 1,
**dadurch gekennzeichnet, daß**
die Korrekturkennlinie (KKL) in einem begrenzten Frequenzbereich aus der inversen Übertragungsfunktion bezüglich Phasen- und Dämpfungsverzerrungen einer oder mehrerer an der Übertragung beteiligter Baugruppen (SAW, A/D, IQ) und/oder der inversen Übertragungsfunktion der Übertragungsstrecke durch die Steuereinheit (MP) berechnet wird.

3. Verfahren nach Anspruch 1 oder 2,
**dadurch gekennzeichnet, daß**
die Gewichtung des Empfangssignals bei der Entzerrung (EZ) durch Multiplikation der Korrekturkennlinie (KKL) mit dem Kurzzeitspektrum (SP) des Empfangssignals erfolgt.

4. Verfahren nach einem der Ansprüche 1 bis 3,
**dadurch gekennzeichnet, daß**
die Korrekturkennlinie (KKL) begrenzt wird, wodurch besonders starke Dämpfungsverzerrungen nicht vollständig ausgeglichen werden.

5. Verfahren nach einem der Ansprüche 1 bis 4,
**dadurch gekennzeichnet, daß**
zur Berechnung der Korrekturkennlinie (KKL) eine zeitliche Mittelung des Kurzzeitspektrums (SP) der Ernpfangssignale für verschiedene Frequenzen oder Frequenzbereiche durchgeführt wird.

6. Verfahren nach einem der Ansprüche 1 bis 5,
**dadurch gekennzeichnet, daß**
die Korrekturkennlinie (KKL) in festgelegten zeitlichen Abständen berechnet wird oder daß sich die zeitlichen Abstände in Abhängigkeit von der Übertragungsqualität oder benutzergesteuert ändem.

7. Verfahren nach einem der Ansprüche 1 bis 6,
**dadurch gekennzeichnet, daß**
die Korrekturkennlinie (KKL) und/oder der gewünschte Verlauf des Kurzzeitspektrums (SP) in einem Speicher (SPE) abgelegt wird.

8. Verfahren zur Übertragung von Signalen für das "Digital Audio Broadcasting" unter Verwendung der Merkmale eines oder mehrerer der Ansprüche 1 bis 7.

## Claims

1. Frequency response correction method for multichannel transmission methods, in which frequency-selective phase distortions and attenuation distortions of the received signal are equalized (EZ) as a result of its short-term spectrum (SP) being formed on the basis of the quantized phase values and amplitude values of the received signal and a correction characteristic curve (KKL) being formed by individual amplification of the separate carriers of the short-term spectrum (SP) to the amplitude of the strongest carrier by means of a control unit (MP) and the short-term spectrum (SP) of the received signal being weighted with said correction characteristic curve (KKL) in the course of the equalization (EZ).

2. Method according to Claim 1, characterized in that, in a limited frequency range, the correction characteristic curve (KKL) is calculated from the inverse transmission function with respect to phase distortions and attenuation distortions of one or more assemblies (SAW, A/D, IQ) involved in the transmission and/or the inverse transmission function of the transmission path by the control unit (MP).

3. Method according to Claim 1 or 2, characterized in that the received signal is weighted during equalization by multiplying the correction characteristic curve (KKL) by the short-term spectrum (SP) of the received signal.

4. Method according to one of Claims 1 to 3, characterized in that the correction characteristic curve (KKL) is limited, as a result of which particularly severe attenuation distortions are not completely equalized.

5. Method according to one of Claims 1 to 4, characterized in that, to calculate the correction characteristic curve (KKL), a time averaging of the short-term spectrum (SP) of the received signals is carried out for various frequencies or frequency ranges.

6. Method according to one of Claims 1 to 5, characterized in that the correction characteristic curve (KKL) is calculated in fixed time intervals or in that the time intervals are changed as a function of the transmission quality or under user control.

7. Method according to one of Claims 1 to 6, characterized in that the correction characteristic curve (KKL) and/or the desired pattern of the short-term spectrum (SP) is stored in a memory (SPE).

8. Method for the transmission of signals for "digital audio broadcasting" using the features of one or more of Claims 1 to 7.

## Revendications

1. Procédé pour corriger la réponse en fréquence pour un procédé de transmission à plusieurs voies, dans lequel a lieu une compensation (EZ) de distorsions de phase et d'affaiblissement sélectives avec la fréquence du signal reçu, dans lequel au moyen des valeurs quantifiées de phase et d'amplitude du signal reçu, son spectre instantané (SP) est formé, et une courbe (KKL) de correction est formée par une amplification individuelle des porteuses individuelles du spectre instantané (SP) sur l'amplitude de la porteuse la plus intense au moyen d'un module de commande (MP), et, lors de la compensation, le spectre instantané (SP) est pondéré par cette courbe (KKL) de correction.

2. Procédé selon la revendication 1,
caractérisé en ce que la courbe (KKL) de correction est calculée par le module de commande (MP) dans un domaine limité de fréquences à partir de la fonction inverse de transmission relativement aux distorsions de phase et d'amplitude d'un ou plusieurs sous-ensembles (SAW, A/D, IQ) participant à la transmission, et/ou de la fonction inverse de transmission du trajet de transmission.

3. Procédé selon la revendication 1 ou 2,
caractérisé en ce que la pondération du signal reçu lors de la compensation (EZ) a lieu au moyen d'une multiplication de la courbe (KKL) de correction par le spectre instantané (SP) du signal reçu.

4. Procédé selon l'une des revendications 1 à 3,
caractérisé en ce que la courbe (KKL) de correction est limitée afin que des distorsions d'amplitude particulièrement intenses ne soient pas complètement compensées.

5. Procédé selon l'une des revendications 1 à 4,
caractérisé en ce que pour calculer la courbe (KKL) de correction, un calcul de moyenne dans le temps du spectre instantané (SP) des signaux reçus est effectué pour diverses fréquences ou divers domaines de fréquences.

6. Procédé selon l'une des revendications 1 à 5,
caractérisé en ce que la courbe (KKL) de correction est calculée à des intervalles fixes de temps ou que les intervalles de temps varient en fonction de la qualité de transmission ou d'une commande de l'utilisateur.

7. Procédé selon l'une des revendications 1 à 6,
caractérisé en ce que la courbe (KKL) de correction et/ou l'évolution souhaitée du spectre instantané (SP) est stoc:kée dans une mémoire (SPE).

8. Procédé pour transmettre des signaux pour le système de radiodiffusion "Digital Audio Broadcasting", utilisant des caractéristiques d'une ou plusieurs des revendications 1 à 7.
